# EUROPEAN PATENT SPECIFICATION

(11) **EP 2 992 403 B1**
(45) Date of publication and mention of the grant of the patent: **22.12.2021**
(21) Application number: 13883636.6
(22) Date of filing: 30.04.2013
(51) Int. Cl.: G06F 3/01, G01S 17/00, G06F 3/03, G06F 3/038, G01B 11/22, G06T 7/50

(54) **DEPTH SENSORS**
TIEFENSENSOREN
CAPTEURS DE PROFONDEUR

(43) Date of publication of application: 09.03.2016
(73) Proprietor: Hewlett-Packard Development Company, L.P., Spring TX 77389 (US)
(72) Inventor: ROBINSON, Ian N., Palo Alto, CA 94304-1100 (US); APOSTOLOPOULOS, John, Palo Alto, CA 94304-1100 (US)
(74) Representative: HGF
(86) International application number: PCT/US2013/038768
(87) International publication number: WO 2014/178836

(56) References cited:
- WO-A1-2012/054060
- CN-A- 103 019 373
- KR-A- 20090 113 801
- KR-A- 20120 129 534
- US-A1- 2003 132 950
- US-A1- 2010 099 457
- US-A1- 2011 119 640
- US-A1- 2012 236 121
- US-A1- 2012 287 031
- US-A1- 2012 327 125
- US-A1- 2013 009 875

## Description

### BACKGROUND

Depth sensors provide devices with information about a user's position and gestures, as well as about the three-dimensional shape of the environment around the depth sensors. Depth sensors fall into two categories: passive stereo cameras and active depth cameras. Passive stereo cameras observe a scene using two or more cameras and use the disparity (displacement) between features in the multiple views of the cameras to estimate depth in the scene. Active depth cameras project an invisible infrared light onto a scene and, from the reflected information, estimate the depth in the scene.

Reference is made to US 2003/132950 A1, which discloses combining stimuli in two or more sensory domains, such as an auditory domain and a visual domain, in order to improve reliability and accuracy of detected user input. Detected events that occur substantially simultaneously in the multiple domains are deemed to represent the same user action, and if interpretable as a coherent action and provided to the system as interpreted input.

Reference is made to CN 103019373 A, which discloses a system and method for activating an electric device from a standby power mode to a full power mode. The system may include one or more microphones for monitoring audio signals in the vicinity of the electric device, and a standby power activation unit including a low-power microprocessor and a non-volatile memory. Audio captured by the one or more microphones is digitized and compared by the microprocessor against predefined activation pattern(s) stored in the non-volatile memory. If a pattern match is detected between the digital audio pattern and a predefined activation pattern, the electric device is activated.

Reference is made to US 2012/287031 A1, which discloses a method of operating a computing device in a reduced power state mode and determining if an object detected by a first sensor is within a threshold distance of the device, whereupon if the object is within the threshold distance, activating a second sensor to determine if the object is a person. If the object is determined to be a person the computing device executes a change in power state.

### BRIEF DESCRIPTION OF THE DRAWINGS

Certain examples are described in the following detailed description and in reference to the drawings, in which:
Fig. 1 is a block diagram of an example of a computing device;
Fig. 2 is a process flow diagram of an example of a method of activating a depth sensor;
Fig. 3 is a process flow diagram of an example of a method of activating a depth sensor;
Fig. 4 is a perspective view of an example of a mobile device; and
Fig. 5 is a block diagram of a tangible, non-transitory, computer-readable medium containing code for activating a depth sensor.

### DETAILED DESCRIPTION OF SPECIFIC EMBODIMENTS

The present invention is defined by the appended independent claims; dependent claims define preferred embodiments.

Active depth sensors can be included in a variety of systems, such as systems that determine the three-dimensional environment in which the system is located and systems that react to user input using gestures, among others. Active depth sensors project light, either modulated in time or with a particular spatial pattern, into an environment and determine depth using an area image sensor to detect the returned phase or pattern. Depth determination methods that rely on calculating depth indirectly from motion or disparity of image features detected using a standard image sensor entail significant processing power and tend to be error prone. Because active depth sensors allow a system to detect depth at various points directly, active depth sensors are less error prone, and processing the output requires less computational work. Active depth sensors thus have an advantage over these previous depth determination methods. In addition, because active depth sensors do not use multiple cameras with a distance (baseline) between the cameras, active depth sensors can be smaller in size than passive stereo cameras.

However, because of the active IR illumination used by the active depth sensors, active depth sensors consume more power than passive stereo cameras. In particular, in order to output enough light to achieve a sufficient signal to noise ratio to counteract ambient light in the scene for the returned depth information, significant power is consumed. Typically this power consumption is limited by the power limitations of a peripheral connect technology, such as USB2, which limits power to approximately 2.5W.

However, some computing systems are unable to support the power consumption of active depth sensors. For example, mobile devices are unable to continuously output 2.5W of power without draining the battery of the mobile device before the length of time the battery is designed to last. For example, a smartphone may consume approximately 0.7W when active and have a battery capacity sufficient for 8 hours of use. Using an active depth sensor for 12 minutes would consume an hour of that battery capacity. By intelligently determining when to use a depth sensor, an active depth sensor with high power consumption can be employed by computing systems that are unable to support the power consumption of active depth sensors.

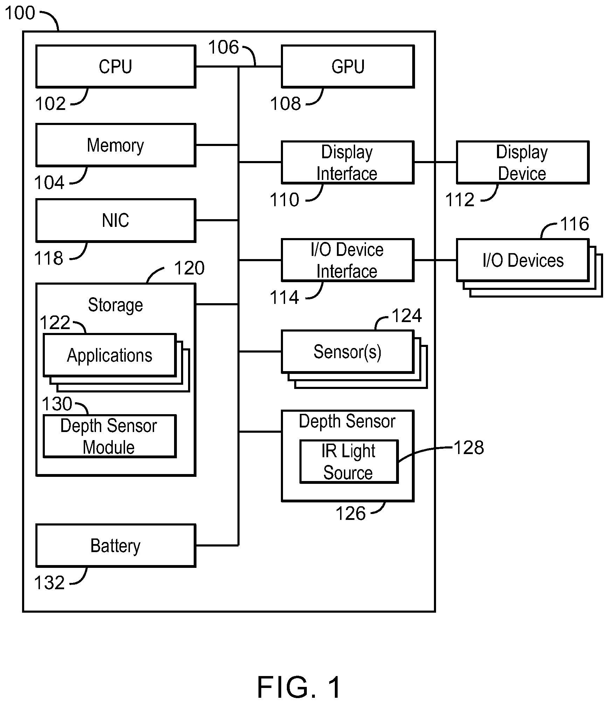

Fig. 1 is a block diagram of an example of a computing device. The computing system 100 can be a mobile device such as, for example, a laptop computer, a tablet computer, a personal digital assistant (PDA), or a cellular phone, such as a smartphone, among others. The computing system 100 can include a central processing unit (CPU) 102 to execute stored instructions, as well as a memory device 104 that stores instructions that are executable by the CPU 102. The CPU 102 can be coupled to the memory device 104 by a bus 106. Additionally, the CPU 102 can be a single core processor, a multi-core processor, or any number of other configurations. Furthermore, the computing system 100 can include more than one CPU 102.

The computing system 100 can also include a graphics processing unit (GPU) 108. As shown, the CPU 102 can be coupled through the bus 106 to the GPU 108. The GPU 108 can perform any number of graphics operations within the computing system 100. For example, the GPU 108 can render or manipulate graphics images, graphics frames, videos, or the like, to be displayed to a user of the computing system 100. In some examples, the GPU 108 includes a number of graphics engines, wherein each graphics engine is configured to perform specific graphics tasks, or to execute specific types of workloads.

The memory device 104 can include random access memory (RAM), read only memory (ROM), flash memory, or any other suitable memory systems. For example, the memory device 104 can include dynamic random access memory (DRAM). The CPU 102 can be linked through the bus 106 to a display interface 110 to connect the computing system 100 to a display device 112. The display device 112 can include a display screen that is a built-in component of the computing system 100. The display device 112 can also include a computer monitor, television, or projector, among others, that is externally connected to the computing system 100.

The CPU 102 can also be connected through the bus 106 to an input/output (I/O) device interface 114 to connect the computing system 100 to one or more I/O devices 116. The I/O devices 116 can include, for example, a keyboard and a pointing device, wherein the pointing device can include a touchpad or a touchscreen, among others. The I/O devices 116 can be built-in components of the computing system 100, or can be devices that are externally connected to the computing system 100.

A network interface card (NIC) 118 can connect the computing system 100 through the system bus 106 to a network (not depicted). The network (not depicted) can be a wide area network (WAN), local area network (LAN), or the Internet, among others. In an example, the computing system 100 can connect to a network via a wired connection or a wireless connection.

The computing system 100 also includes a storage device 120. The storage device 120 is a physical memory such as a hard drive, an optical drive, a thumbdrive, a secure digital (SD) card, a microSD card, an array of drives, or any combinations thereof, among others. The storage device 120 can also include remote storage drives. The storage device 120 includes any number of applications 122 that run on the computing system 100.

The computing system 100 further includes any number of sensors 124. The sensors can collect data relative to the computing system 100 and an environment surrounding the computing system 100. For example, the sensors can be a camera, accelerometers, gyroscopes, proximity sensors, touch sensors, microphones, near field communication (NFC) sensors, timers, or any combination thereof, among others. The sensors can be I/O devices which communicate with the computing system 100 via an interface. The sensors can be external to the computing system 100 or the sensors can be incorporated in the computing device.

The computing system 100 also includes a depth sensor 126, such as an active depth sensor. The depth sensor 126 collects depth data in response to an indication of an occurrence of a change in the environment in the data collected by the sensors 124. Changes in the environment can exclude powering the computing system 100 on and off. By activating the depth sensor 126 when changes are detected by the sensors 124, the depth sensor 126 can be used to initialize and augment depth calculations derived from the more power-efficient sensors 124.

The depth sensor 126 can include an IR light source 128. The IR light source 128 can be any suitable type of IR light source, such as an LED or a laser-based IR light source. For example, the IR light source 128 can be designed to turn on and off quickly. In an example, when the depth sensor 126 is activated, the IR light source 128 can project light into the environment surrounding the computing system 100. The depth sensor can detect the IR light reflected back from the environment and determine the depth values for the environment.

The computing system 100 can also include a depth sensor module 130. The depth sensor module 130 can be a software module, such as an application, that activates the depth sensor 126 when an occurrence of a change in the environment is indicated by data collected by sensor(s) 124. The computing system 100 can include a battery 132 to power the device.

The depth data collected by the depth sensor 126 can be processed, such as by CPU 102, and depth values can be assigned to features of the environment. The depth data can be used in a variety of ways. For example, the computing system 100 can be moved around an environment or object and the depth data can be stitched together to form a three dimensional model of the environment or object. In another example, the depth information can be used to separate a user or object from their background. In a further example, the depth data can be used to track user gestures in space, such as for controlling the computing device.

According to the present invention, movement of the computing system 100 can be detected by the sensors 124. For example, movement of the computing device can be detected by an accelerometer or a gyroscope, among others. Similarly, according to examples not covered by the present invention, movement of or within the environment or scene surrounding the computing system 100 can also be detected by the sensors 124. When movement of the computing device is detected, the depth sensor 126 can be activated, such as by depth sensor module 130, to capture depth data of the environment. For example, when the amount of change detected by the sensors 124 exceeds a predetermined threshold, the depth sensor 126 can be activated. In an example, the depth sensor 126 can perform a single capture of depth data. In another example, the depth sensor can perform multiple captures of depth data. Performing multiple captures of depth data can enable the computing system 100 to average out sensor noise.

In another example, the sensor 124 can be a camera. The camera can be run continuously at a suitable frame rate. In another example, the camera can be activated after receiving a signal from a user. The frames captured by the camera can be analyzed, such as by the processor. According to examples not covered by the present invention, when changes in the scene are detected, the depth sensor 126 can be activated to collect depth data.

In a further example, the sensor 124 can be a camera, such as an RGB camera. The depth sensor can be activated to capture initial depth data, such as in a flash capture, when the camera is initially activated. The depth data can be analyzed to assign depths to image features. The camera can continue to capture frames continuously or intermittently. For example, the camera can capture video. The depth data aids in the analysis of the captured image data to track image features in three dimensions. Conventional computer vision tracking techniques and structure from motion techniques can be used to analyze the captured frames.

In each frame captured by the camera, a count can be maintained of new image features that have been detected, as well as a count of depth-labeled image features (i.e., image features labeled with depth data in previous depth data collection) which are no longer visible in the scene. The image features can no longer be visible in the scene due to a variety of reasons, such as occlusion (e.g., when an opaque object moves in front of the image feature), moving out of the camera's field of view, or dropping below a confidence threshold in the tracking algorithm, among others.

A tracking algorithm looks for possible matches between image features in one frame and image features in the next captured frame. As the camera or scene moves, changes in the lighting and three dimensional shapes lead to an inability to find an exact correspondence between images in the frame. Because of this inability, the algorithm assigns a confidence value that a feature in a frame is the same feature from a previous frame. According to examples not covered by the present invention, when either of the counts, or the confidence value, exceeds a predetermined threshold, the depth sensor 126 can be activated to collect depth data. The predetermined threshold can be a value set by the manufacturer or the user. In another example, the threshold can be calculated by the computing system 100.

The length of time that the depth sensor 126 is active can be specified by a user or a manufacturer, or calculated by the computing system 100. During activation, the depth sensor 126 can perform a single capture of depth data or multiple captures of depth data to overcome sensor noise. Depth values can be assigned to the images features visible in the current scene. According to examples not covered by the present invention, any
suitable techniques for determining scene changes can be used to activate the depth sensor 126.

In some examples, not covered by the present invention, the sensor 124 is a timer. The timer can be set to note when a predetermined period of time has elapsed. When the period of time has elapsed, the depth sensor 126 can be activated to capture depth data. In some examples, the depth data captured after the period of time has elapsed is combined with data collected by a camera, such as in the method described above.

In some examples, not covered by the present invention, the sensor 124 can receive a signal from a user. For example, the signal could be pushing a button or touching a designated portion of the screen of the device. Upon receiving the signal from the user, the sensor 124 can activate the depth sensor 126 to collect depth data. The depth sensor 126 can perform a single capture of depth data, multiple captures of depth data, or can continuously capture depth data until the sensor 124 receives a signal from the user to cease capturing depth data.

It is to be understood the block diagram of Fig. 1 is not intended to indicate that the computing system 100 is to include all of the components shown in Fig. 1 in every case. Further, any number of additional components can be included within the computing system 100, depending on the details of the specific implementation.

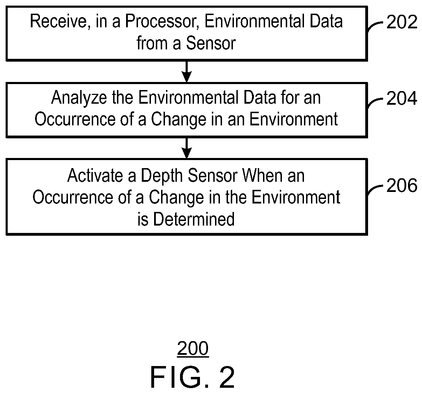

Fig. 2 is a process flow diagram of an example of a method 200 of activating a depth sensor. For example, the method 200 can be executed by the computing device described with respect to Fig. 1. At block 202, environmental data from a sensor, such as sensor 124, can be received in a processor, such as CPU 102. The sensor can be any suitable sensor such as an accelerometer, a gyroscope, a camera, or a combination thereof, among others. The environmental data can be collected by the sensor(s) and can describe the environment surrounding a computing device. The environmental data can also describe movements of the computing device. Further, the environmental data can include the amount of time elapsed.

At block 204, the environmental data can be analyzed for an occurrence of a change in the environment. For example, the environmental data can be analyzed to determine if elements have entered or exited the environment, to determine if the device has moved, to determine if a predetermined period of time has elapsed, to determine if a signal from a user has been received, etc. Changes in the environment can exclude powering the computing system on or off.

At block 206, a depth sensor can be activated when an occurrence of a change in the environment is determined. For example, the depth sensor can be activated when the amount of changes in the environment exceed a predetermined threshold. In an example, the threshold can be determined by a user, a manufacturer, or calculated by the computing device.

It is to be understood that any number of additional steps not shown in Fig. 2 can be included within the method 200, depending on the details of the specific implementation.

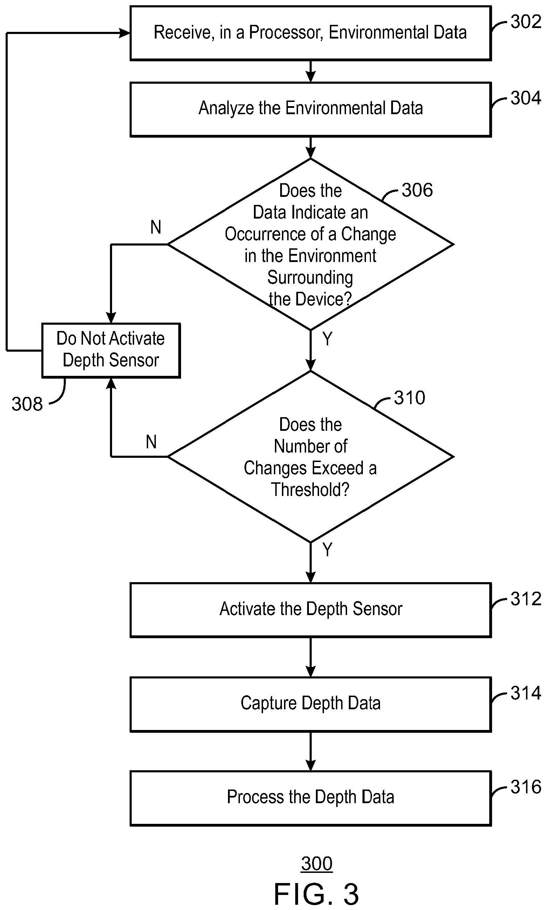

Fig. 3 is a process flow diagram of an example of a method 300 of activating a depth sensor. For example, the method 300 can be executed by the computing system 100 described with respect to Fig. 1. At block 302, environmental data can be received in a processor, such as CPU 102. The environmental data can be collected by a sensor(s), such as an accelerometer, gyroscope, camera, touch sensor, timer, etc. The environmental data can describe an environment surrounding a computing device, movement of the computing device, an amount of time elapsed, etc.

At block 304, the environmental data can be analyzed. For example, the environmental data can be analyzed by a processor, such as CPU 102. At block 306, the processor determines if the data indicates an occurrence of a change in the environment surrounding the device. If the data does not indicate the occurrence of a change in the environment, the method can continue to block 308, where the depth sensor is not activated. The method can then return to block 302.

If the processor determines at block 306 that the data does indicate the occurrence of a change in the environment, the method can continue to block 310. At block 310, the processor determines if the number of changes exceeds a threshold. In an example, the threshold can be set by a manufacturer, a user, or calculated by the computing device. If the number of changes does not exceed the threshold, the method can continue to block 308. If the number of changes does exceed the threshold, at block 312, a depth sensor can be activated. The depth sensor can be an active depth sensor.

At block 314, the depth sensor can capture depth data. For example, the depth sensor can include an IR light source to illuminate the environment. The depth sensor can capture reflected light to determine depth values of the environment.

At block 316, the depth data can be processed, such as by a processor. The processed depth data can be used in a variety of ways. For example, the computing device can be moved around an environment or object and the depth data can be stitched together to form a three dimensional model of the environment or object. In another example, the depth information can be used to separate a user or object from their background. In a further example, the depth data can be used to track user gestures in space, such as for controlling the computing device.

It is to be understood that not all of the steps of the method 300 are to be included in every case. Further, any number of additional steps not shown in Fig. 3 can be included within the method 300, depending on the details of the specific implementation.

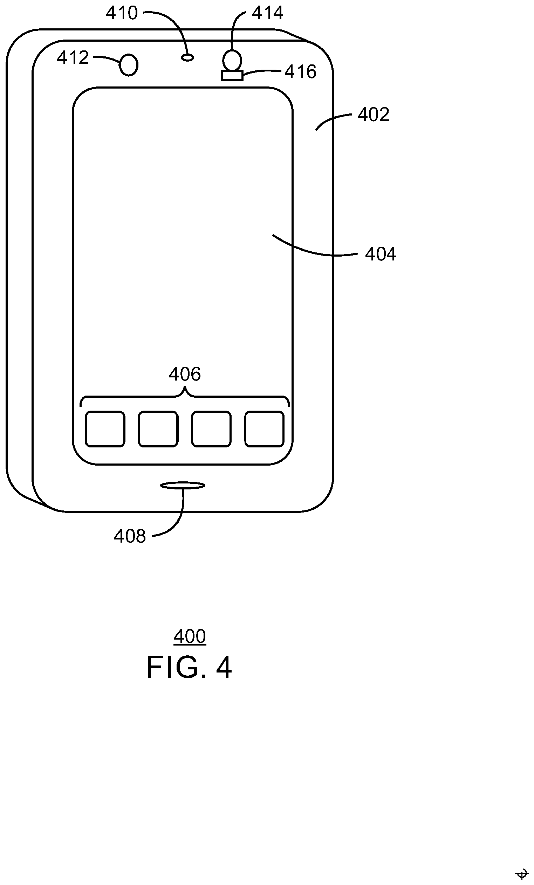

Fig. 4 is an illustration of an example of a mobile device 400. The mobile device can be a laptop computer, a tablet computer, a personal digital assistant (PDA), or a cellular phone, such as a smartphone, among others. The mobile device can include a housing 402, a display 404, an input/output (I/O) 406, such as touch keys, a microphone 408, a speaker 410, and an antenna and transceiver (not shown). The display 404 can include any suitable display unit for displaying formation. The I/O 406 can include any suitable I/O for entering information into the mobile device 400. In an example, the display 404 and I/O 406 can be combined, such as in a touchscreen. The mobile device can further include a battery (not shown) to power the device.

The mobile device can also include a sensor 412, or a plurality of sensors. The sensors can be any suitable sensor for collecting environmental data, i.e., data about the mobile device and its surrounding environment. For example, the sensor(s) can be a camera, accelerometers, gyroscopes, proximity sensors, touch sensors, microphones, near field communication (NFC) sensors, timers, or any combination thereof, among others. The mobile device can also include a depth sensor 414 and an IR light source 416. The depth sensor 414 and IR light source 416 can be situated in the front of the housing 402, facing the user, or in the back of the housing 402, facing away from the user. In another example, the mobile device 400 can include a depth sensor 414 and IR light source 416 in the front of the housing 402 and the back of the housing 402. The data collected by the sensors can be analyzed to determine the occurrence of a change in the environment. When the occurrence of a change in the environment is determined, the depth sensor 414 can be activated to collect depth data. For example, the IR light source 416 can illuminate the environment and the depth sensor can collect reflected light to determine depth values.

It is to be understood the illustration of Fig. 4 is not intended to indicate that the mobile device 400 is to include all of the components shown in Fig. 4 in every case. Further, any number of additional components can be included within the mobile device 400, depending on the details of the specific implementation.

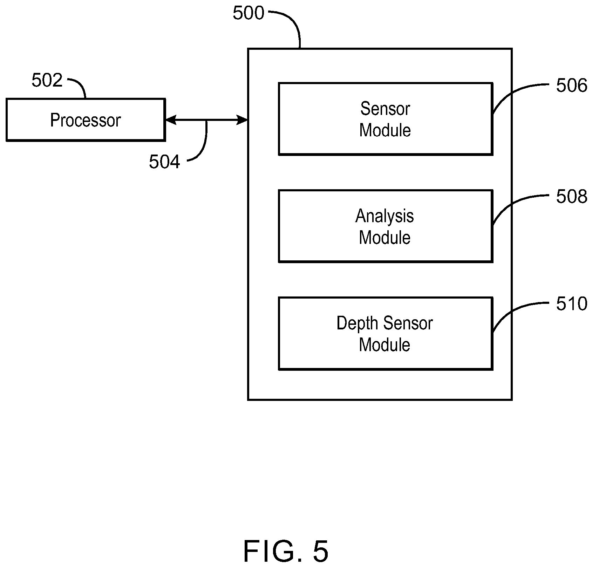

Fig. 5 is a block diagram of a tangible, non-transitory, computer-readable medium containing code for activating a depth sensor. The tangible, non-transitory, computer-readable medium is referred to by the reference number 500. The tangible, non-transitory, computer-readable medium 500 can be RAM, a hard disk drive, an array of hard disk drives, an optical drive, an array of optical drives, a non-volatile memory, a universal serial bus (USB) drive, a digital versatile disk (DVD), or a compact disk (CD), among others. The tangible, non-transitory, computer-readable storage medium 500 can be accessed by a processor 502 over a computer bus 504. The tangible, non-transitory, computer-readable storage medium 500 can be included in a mobile device, such as mobile device 400. Furthermore, the tangible, non-transitory, computer-readable medium 500 can include code configured to perform the methods described herein.

As shown in Fig. 5, the various components discussed herein can be stored on the non-transitory, computer readable medium 500. A first region 506 on the tangible, non-transitory, computer-readable medium 500 can include a sensor module for collecting data about an environment surrounding a computing system. A region 508 can include an analysis module to analyze the environmental data for changes in the environment. A region 510 can include a depth sensor module to collect depth data in response. The depth sensor module 510 can be activated to collect depth data in response to a determination of an occurrence of a change in the environment. Although shown as contiguous blocks, the software components can be stored in any order or configuration. For example, if the tangible, non-transitory, computer-readable medium 500 is a hard drive, the software components can be stored in non-contiguous, or even overlapping, sectors.

### Example 1

A computing system is described herein. The computing system includes a processor and a sensor to collect data about an environment surrounding the computing system. The computing system also includes a depth sensor to collect depth data in response to a determination of an occurrence of a change in the environment.

The depth sensor can collect depth data when a predetermined period of time has elapsed. The change in the environment can include an element changing position relative to the environment, changing position comprising an element entering the environment, an element leaving the environment, an element moving within the environment, or a combination thereof. The change in the environment can include a change in view of the system. The computing system can include a battery to power the computing system.

### Example 2

A tangible, non-transitory, computer-readable storage medium is described herein. The tangible, non-transitory, computer-readable storage medium includes code to direct a processor to receive, in a processor of a mobile device, environmental data from a sensor. The code is also to direct a processor to analyze the environmental data for changes in an environment. The code can further direct a processor to activate a depth sensor when an occurrence of a change in the environment is determined.

The depth sensor can be activated when an amount of change in the environment exceeds a predetermined threshold. The change in the environment can include an element changing position relative to the environment, changing position comprising an element entering the environment, an element leaving the environment, an element moving within the environment, or a combination thereof. The change in the environment can include a change in position of a device relative to the environment.

### Example 3

A mobile device is described herein. The mobile device can include a sensor to collect data relative to an environment surrounding the mobile device. The mobile device can also include a processor to analyze the data. The mobile device can further include a depth sensor to collect depth data when the processor determines the data indicates an occurrence of a change in the environment.

The depth sensor can collect depth data when a predetermined time has elapsed. The depth sensor can perform a depth capture when an amount of change in the environment exceeds a predetermined threshold. The depth sensor can be activated to capture user gestures. The sensor can be a camera and the depth sensor collects initial depth data when the camera is initially activated. The depth sensor can collect subsequent depth data when changes in an image feature exceed a predetermined threshold, the changes comprising new features detected, previously detected features no longer visible, a change in confidence values associated with matching against previously detected image features, or a combination thereof.

## Claims

1. A computing system (100, 400), comprising:
a processor (102);
a sensor (124, 412) to collect environmental data relative to the computing system and an environment surrounding the computing system; and
a depth sensor (126, 414) to collect depth data in response to a determination by the processor of a movement of the computing system in the environment, wherein the determination of the movement is based on the collected environmental data from the sensor (124, 412).

2. The computing system of claim 1, wherein the depth sensor is activated when an amount of movement of the computing device detected by the sensor (124) exceeds a
predetermined threshold.

3. The computing system of claim 1, wherein the depth sensor performs a single capture of depth data.

4. The computing system of claim 1, wherein the depth sensor performs multiple captures of depth data.

5. The computing system of claim 1, wherein the computing system comprises a battery (132) to power the computing system.

6. The computing system of any preceding claim, wherein the computing system is a mobile device (400).

7. A tangible, non-transitory, computer-readable storage medium (500),
comprising code to direct a processor to:
receive (302) environmental data from a sensor, wherein the environmental data describes an environment surrounding a computing device and describes movements of the computing device;
analyze (304) the environmental data to detect a movement of the computing device in the environment; and
collect (314) depth data from a depth sensor in response to the detection of the movement of the computing device.

8. The tangible, non-transitory, computer-readable storage medium of claim 7, further comprising collecting the depth data when an amount of movement of the computing device exceeds a predetermined threshold (310).

## Patentansprüche

1. Rechensystem (100, 400), das Folgendes umfasst:
einen Prozessor (102);
einen Sensor (124, 412), um Umgebungsdaten relativ zu dem Rechensystem und einer Umgebung, die das Rechensystem umgibt, zu sammeln; und
einen Tiefensensor (126, 414), um Tiefendaten als Reaktion auf eine Bestimmung, durch den Prozessor, einer Bewegung des Rechensystems in der Umgebung zu sammeln, wobei die Bestimmung der Bewegung auf der Basis der gesammelten Umgebungsdaten von dem Sensor (124, 412) erfolgt.

2. Rechensystem nach Anspruch 1, wobei der Tiefensensor aktiviert wird, wenn ein Ausmaß an Bewegung der Rechenvorrichtung, die durch den Sensor (124) erkannt wird, eine zuvor bestimmte Schwelle überschreitet.

3. Rechensystem nach Anspruch 1, wobei der Tiefensensor eine einzelne Erfassung von Tiefendaten durchführt.

4. Rechensystem nach Anspruch 1, wobei der Tiefensensor mehrere Erfassungen von Tiefendaten durchführt.

5. Rechensystem nach Anspruch 1, wobei das Rechensystem eine Batterie (132) dazu umfasst, das Rechensystem mit Strom zu versorgen.

6. Rechensystem nach einem der vorhergehenden Ansprüche, wobei das Rechensystem eine mobile Vorrichtung (400) ist.

7. Greifbares, nicht flüchtiges, computerlesbares Speichermedium (500), das Code dazu umfasst, einen Prozessor zu Folgendem anzuweisen:
Empfangen (302) von Umgebungsdaten von einem Sensor, wobei die Umgebungsdaten eine Umgebung beschreiben, die eine Rechenvorrichtung umgibt, und Bewegungen der Rechenvorrichtung beschreiben;
Analysieren (304) der Umgebungsdaten, um eine Bewegung der Rechenvorrichtung in der Umgebung zu erkennen; und
Sammeln (314) von Tiefendaten von einem Tiefensensor als Reaktion auf die Erkennung der Bewegung der Rechenvorrichtung.

8. Greifbares, nicht flüchtiges, computerlesbares Speichermedium nach Anspruch 7, das ferner das Sammeln der Tiefendaten umfasst, wenn ein Ausmaß an Bewegung der Rechenvorrichtung eine zuvor bestimmte Schwelle überschreitet (310).

## Revendications

1. Système informatique (100, 400), comprenant :
un processeur (102) ;
un capteur (124, 412) destiné à collecter des données environnementales relatives au système informatique et à un environnement entourant le système informatique ; et
un capteur de profondeur (126, 414) destiné à collecter des données de profondeur en réponse à une détermination par le processeur d'un mouvement du système informatique dans l'environnement, la détermination du mouvement étant basée sur les données environnementales collectées à partir du capteur (124, 412).

2. Système informatique selon la revendication 1, dans lequel le capteur de profondeur est activé lorsqu'une quantité de mouvement du dispositif informatique détectée par le capteur (124) dépasse un seuil prédéterminé.

3. Système informatique selon la revendication 1, dans lequel le capteur de profondeur effectue une seule capture de données de profondeur.

4. Système informatique selon la revendication 1, dans lequel le capteur de profondeur effectue plusieurs captures de données de profondeur.

5. Système informatique selon la revendication 1, dans lequel le système informatique comprend une batterie (132) destinée à alimenter le système informatique.

6. Système informatique selon l'une quelconque des revendications précédentes, dans lequel le système informatique est un dispositif mobile (400).

7. Support de stockage tangible, non transitoire et lisible par ordinateur (500), comprenant un code destiné à diriger un processeur vers :
la réception (302) des données d'environnement d'un capteur, les données d'environnement décrivant un environnement entourant un dispositif informatique et décrivant les mouvements du dispositif informatique ;
l'analyse (304) des données environnementales destinée à détecter un mouvement du dispositif informatique dans l'environnement ; et
la collecte (314) des données de profondeur à partir d'un capteur de profondeur en réponse à la détection du mouvement du dispositif informatique.

8. Support de stockage tangible, non transitoire et lisible par ordinateur selon la revendication 7, comprenant en outre la collecte des données de profondeur lorsqu'une quantité de mouvement du dispositif informatique dépasse un seuil prédéterminé (310).
